# EUROPÄISCHE PATENTANMELDUNG

(11) **EP 3 220 655 A1**
(43) Veröffentlichungstag der Anmeldung: **20.09.2017**
(21) Anmeldenummer: 17401017.3
(22) Anmeldetag: 22.02.2017
(51) Int. Cl.: H04N 21/482

(54) **EMPFANGSEINRICHTUNG**

(30) Priorität: 15.03.2016 DE 102016104769
(71) Anmelder: TechniSat Digital GmbH, 54550 Daun (DE)
(72) Erfinder: Rother, Norman, 01187 Dresden (DE); Frenzel, Sandro, 01156 Dresden (DE)

(57) **Zusammenfassung**

Die Erfindung betrifft eine Empfangseinrichtung (1) zum Empfangen von Medieninhalten (2) und insbesondere von linearen Medieninhalten aus verschiedenen Medienquellen (3) und zum Ausgeben derselben aufweisend, eine Ausgabevorrichtung (4), eine Bedienvorrichtung (5) und eine Datenverarbeitungseinheit (6). Die ist Bedienvorrichtung (5) eingerichtet, mindestens einen Bedienbefehl (15) an die Datenverarbeitungseinheit (6) zu übergeben,
wobei die Datenverarbeitungseinheit (6) eingerichtet ist, der Ausgabevorrichtung (4) mindestens einen Ausgabeinhalt (8) bereitzustellen. Mit dem Ausgabeinhalt (8) ist ein Funktionsumfang (13), der mindestens eine Funktion (11,12) aufweist, derart verknüpft, dass die Datenverarbeitungseinheit (6) den von der Bedienvorrichtung (5) übergebenen Bedienbefehl (15) einer Funktion (11,12) des Funktionsumfanges (13) zuordnet und die Funktion (11,12) ausführt. Eine erste Funktion (11) ist derart eingerichtet ist, dass der Ausgabeinhalt (8) ein externer Ausgabeinhalt (9) ist, der von einer der
Medienquellen (3) bezogenen Medieninhalt (2) aufweist. Eine zweite Funktion (12) ist derart eingerichtet, dass Ausgabeinhalt (8) ein interner Ausgabeinhalt (10) ist, der aus Daten (14), die in der und/oder der Datenverarbeitungseinheit (6) bereitgestellt sind, gebildet ist, [...].

## Beschreibung

Die Erfindung betrifft eine Empfangseinrichtung. Die Empfangseinrichtung ist zum Empfangen von Medieninhalten und insbesondere von linearen Medieninhalten ausgebildet. Die Lösung eignet sich zur Verwendung auf dem Gebiet der Fernsehtechnik.

Bei der Empfangseinrichtung kann es sich beispielsweise um ein TV- Gerät oder um ein an einen Flachbildschirm angeschlossenes externes Gerät handeln, das für den Rundfunk und zur Ausgabe/Wiedergabe von Bild (inklusive Ton) insofern ausgebildet ist, dass ein dafür vorgesehene Signal (zum Beispiel HDMI) von dem Gerät bereitgestellt werden kann. Eine Empfangseinrichtung kann aber auch ein Computerprogramm mit und für einen TV-Empfänger (z.B. TV-Karte, TV-USB-Stick) sein. Ein solcher TV-Empfänger ist für den Rundfunkempfang eingerichtet. Eine Empfangseinrichtung kann mit weitestem Sinne auch ein Gerät zum Radioempfang sein oder eine vergleichbare Einrichtung in einem Kraftfahrzeug.

Ferner ist die Empfangseinrichtung zur Verwendung eines (Computer-)Netzwerkes eingerichtet. D.h., dass die Empfangseinrichtung für eine LAN/WAN-Verbindung ausgebildet ist; ggf. drahtlose Verbindungen.

Es ist für Rundfunkempfänger jeglicher Art notorisch bekannt, dass ein Bediener die Möglichkeit hat, das zu empfangende Programm zu wählen. Moderne Empfänger sind hierfür mit einer Fernbedienung ausgestattet. Mithilfe der Fernbedienung kann ein Bediener ein Programm oder einen Programmplatz wählen durch Eingabe einer oder mehrerer Ziffern sowie durch Eingabe mittels so genannter Richtungsindikatoren, d.h. Pfeile oder Plus-/Minus. Eine derartige Eingabe kann dadurch unterstützt sein, dass auf der Anzeige eines TV Gerätes eine Liste dargestellt wird, aus der der Bediener das zu empfangende Programm auswählt und seine Auswahl bestätigt.

Sofern eine Empfangseinrichtung eingerichtet ist, linearen/nicht-linearen Medieninhalt von einer Reihe von Medienquellen zu beziehen, besteht die Problematik darin, die Vielfalt der ausführbaren Programme dem Bediener übersichtlich anzubieten. Die Vielfalt ist insbesondere dort gegenwärtig, wo neben dem Empfang über den terrestrischen Weg, über Satellit, über Kabel auch der Empfang von sowohl von nichtlinearen als auch von linearem Medieninhalt über das Internet möglich ist. Bei Geräten mit Empfangsmöglichkeiten von nicht-linearem Medieninhalt ist die Rede von Hybrid-TV-Empfängern. Im Ergebnis setzt sich bei solchen Empfängern die Vielzahl der ausführbaren Programme oder abrufbaren Inhalte aus Fernsehen- und Rundfunk-Programmen (linearer Medieninhalt) sowie Internet-Angeboten (nicht-linearer Medieninhalt) zusammen. Nachfolgen werden der lineare Medieninhalt und der nicht-lineare Medieninhalt als Medieninhalt bezeichnet.

Es ist bekannt, die Übersichtlichkeit bei der Programmauswahl dadurch herzustellen, dass Programme, die aus unterschiedlichen Quellen (wie z.B. TV, Radio, Internet) bereitgestellt werden, in Listen zusammengefasst werden. Derartiges ist beispielsweise aus der DE 10 2013 210 644 A1 bekannt sowie aus EP 1 177 627 B2.

Neben der Vielfalt der auswählbaren Programme und der Vielfalt der Wege und Möglichkeiten die Programme auszuwählen, gibt es bei den in Betracht kommenden Empfangseinrichtungen ferner eine Reihe zusätzlicher Möglichkeiten und Funktionen, die gleichermaßen für den Bediener von Interesse sein könnten. Darunter kann beispielsweise verstanden werden, dass ein Zustand des TV-Gerätes (z.B. ein Empfangspegel) oder eine Information, die das TV-Gerät aus sich heraus erzeugen kann, angezeigt werden soll. Ein einfaches Beispiel hierfür ist die Uhrzeit in der Darstellung eines Zifferblattes derart, dass das Zifferblatt die Anzeigefläche einer Ausgabevorrichtung (Bildschirm) nahezu vollständig beansprucht.

Ferner könnte für den Bediener eine Information von Interesse sein, die dann in der Empfangseinrichtung verfügbar ist, wenn einen zusätzliches Gerät an das TV-Gerät angeschlossen oder in das TV-Gerät integriert ist. Das bietet sich an, sofern das zusätzliche Gerät anzeigenbare Informationen bereitstellen kann oder zumindest solche Daten aufweist, die sich seitens des TV-Gerätes auswerten lassen.

Die angesprochene technische Komplexität von multifunktional ausgestatteten Empfangseinrichtungen entwickelt sich hinsichtlich der Bedienung konträr zu dem menschlichen Vermögen, diese Dinge überschauen und beherrschen zu können. Das wird insbesondere dann deutlich, wenn Menschen im fortgeschrittenen Alter Geräte mit komplexer technischer Ausgestaltung bedienen sollen oder wollen. Es kann vorkommen, dass eine besagte Person die eigenen Bedienhandlungen auf ein Mindestmaß reduziert hat, nämlich das TV-Gerät einschalten, zwischen zwei oder drei Programmen wechseln und wieder ausschalten.

Für den angesprochenen Personenkreis kann es dennoch von Interesse sein, die Empfangseinrichtung oder das TV-Gerät für eine Kommunikation mit Geräten, Personen oder für das Lesen von individuell relevanten Informationen zu nutzen. Bei diesen individuell relevanten Informationen kann es sich beispielsweise auch um Körpermessdaten wie Blutdruck oder Blutzuckerspiegel handelt.

Es kann als ein Lösungsbedürfnis angesehen werden, dass eine Empfangseinrichtung vorsieht, dass eine Funktion, die die Empfangseinrichtung bereitstellt und die insbesondere nicht zur Anzeige von Medieninhalten ausgebildet ist, mittels vergleichsweise einfacher Bedienhandlungen oder -schritte von dem Bediener erreicht und/oder ausgewählt werden kann.

Es wird eine Empfangseinrichtung gemäß Anspruch 1 vorgeschlagen. In den abhängigen Ansprüchen sind Ausführungsformen aufgezeigt.

Gemäß einer ersten Ausgestaltung ist eine Empfangseinrichtung vorgesehen, wobei die Empfangseinrichtung zum Empfangen von Medieninhalten aus verschiedenen Medienquellen und zum Ausgeben derselben eine Ausgabevorrichtung, eine Bedienvorrichtung und eine Datenverarbeitungseinheit aufweist. Die Bedienvorrichtung ist eingerichtet, mindestens einen Bedienbefehl an die Datenverarbeitungseinheit zu übergeben. Die Datenverarbeitungseinheit ist eingerichtet, der Ausgabevorrichtung mindestens einen Ausgabeinhalt bereitzustellen. Mit dem Ausgabeinhalt ist ein Funktionsumfang, der mindestens eine Funktion aufweist, derart verknüpft, dass die Datenverarbeitungseinheit den von der Bedienvorrichtung übergebenen Bedienbefehl einer Funktion des Funktionsumfanges zuordnet und die Funktion ausführt. Eine erste Funktion ist derart eingerichtet, dass der Ausgabeinhalt ein externer Ausgabeinhalt ist, der von einer der Medienquellen bezogenen Medieninhalt aufweist. Ferner ist eine zweite Funktion derart eingerichtet, dass der Ausgabeinhalt ein interner Ausgabeinhalt ist, der aus Daten, die in der und/oder der Datenverarbeitungseinheit bereitgestellt sind, gebildet ist.

Gemäß einer Ausführungsform der Empfangseinrichtung ist vorgesehen, dass der interne Ausgabeinhalt insbesondere keinen Medieninhalt aufweist und ausschließlich aus den Daten der Datenverarbeitungseinheit gebildet ist.
In dem Funktionsumfang ist der mindestens eine Bedienbefehl der mindestens einen Funktionen derart zugeordnet und die Datenverarbeitungseinheit eingerichtet, mittels des mindestens einen Bedienbefehls eine erste Funktion entsprechend einer Sequenz auszuwählen. In die Sequenz ist mindestens einmal eine zweite Funktion eingegliedert.

In die Sequenz sind mehrere erste Funktionen eingegliedert.

Gemäß einer Ausführungsform der Empfangseinrichtung ist vorgesehen, dass der interne Ausgabeinhalt aus Daten gebildet ist, die Systemdaten der Empfangseinrichtung und/oder der Datenverarbeitungseinheit sind, wobei die Systemdaten aufweisen, Datum/Uhrzeit, Betriebsdauer, Stromverbrauch und Benutzungszeiten sowie ferner Information zur Empfangsqualität und zu/von mindestens einem gekoppelten Gerät.

Gemäß einer Ausführungsform der Empfangseinrichtung ist vorgesehen, dass die Datenverarbeitungseinheit eine Empfangseinheit aufweist und/oder mit einer solchen gekoppelt ist zum Empfangen von Medieninhalten aus verschiedenen Medienquellen, wobei die erste Funktion eingerichtet ist, die Empfangseinheit zu verwenden.

Gemäß einer Ausführungsform der Empfangseinrichtung ist vorgesehen, dass die Datenverarbeitungseinheit ein Generator aufweist zum Erzeugen des mindestens einen Ausgabeinhaltes, wobei die zweite Funktion eingerichtet ist, den Generator zu verwenden zum Erzeugen des mindestens einen internen Ausgabeinhaltes.

Gemäß einer Ausführungsform der Empfangseinrichtung ist vorgesehen, dass der Generator eingerichtet ist, formatierte Daten im XML-Format und/oder in einem HTML-Format zu erzeugen.

Gemäß einer Ausführungsform der Empfangseinrichtung ist vorgesehen, dass mittels des mindestens einen Bedienbefehls eine erste Funktion entsprechend einer Sequenz aus Zahlen indem auszuwählen ist, dass entweder die Ziffern der Zahl der Funktion in der Sequenz vollständig oder anteilig eingeben werden oder ein Richtungsindikator, um die Zahl zu in- oder dekrementieren, wobei die Bedienvorrichtung zum Eingeben von Ziffern Tasten mit Ziffern und zum Eingeben von Richtungsindikatoren Tasten mit Pfeilen und/oder Plus-/Minus-Zeichen aufweist zum Übergeben eines adäquaten Bedienbefehls an die Datenverarbeitungseinheit.

Gemäß einer Ausführungsform der Empfangseinrichtung ist vorgesehen, dass die mindestens eine erste Funktion eine eindeutige Kennung im Zahlenformat für einen Programmplatz aufweist, wobei die Sequenz nach der eindeutigen Kennung aufsteigend gebildet ist.

Gemäß einer Ausführungsform der Empfangseinrichtung ist vorgesehen, dass die mindestens eine zweite Funktion einen Verweis auf die Kennung einer ersten Funktion aufweist, nach der die zweite Funktion in die Sequenz eingegliedert ist.

Gemäß einer Ausführungsform der Empfangseinrichtung ist vorgesehen, dass der Ausgabeinhalt aus dem internen Ausgabeinhalt und dem externen Ausgabeinhalt gebildet ist, wobei der interne Ausgabeinhalt eine Transparenz aufweist und somit den externen Ausgabeinhalt überlagert, wobei der externer Ausgabeinhalt, der zuletzt nicht überlagert angezeigte ist.

Gemäß einer weiteren Ausgestaltung ist eine Programmliste in einer Empfangseinrichtung vorgesehen. Die Programmliste weist Listeneinträge in zwei Kategorien auf. Ein Listeneintrag der ersten Kategorie ist mit einem Programm (im Sinne eines TV-Programms) verknüpft, wobei das Programm zum Empfangen von Medieninhalt und zum Ausgeben desselben, nämlich eines externen Ausgabeinhaltes, auf einer Ausgabevorrichtung eingerichtet ist. Ein Listeneintrag der zweiten Kategorie ist mit einem Generator der Empfangseinrichtung verknüpft ist, wobei der Generator eingerichtet ist, den auf der Ausgabevorrichtung auszugebenden Ausgabeinhalt zu erzeugen, nämlich einen internen Ausgabeinhalt. Der Ausgabeinhalt weist insbesondere keinen Medieninhalt auf, sondern ist aus Daten gebildet, die in einer Datenverarbeitungseinheit der Empfangseinrichtung bereitgestellt sind.

Es folgen Ausführungsformen der Programmliste.

Die Programmliste ist in der Datenverarbeitungseinheit gebildet.

Die Programmliste ist in einer Sequenz gebildet.

Die Empfangseinrichtung ist derart eingerichtet, dass sofern ein Listeneintrag der Programmliste gewählt ist, die mit dem Listeneintrag verknüpfte Funktion ausgeführt wird.

Ein Listeneintrag ist in die Programmliste in der Sequenz derart eingeordnet ist, dass ein Auswählen eines Listeneintrages mittels einer Bedienvorrichtung unterstützt wird. Die Bedienvorrichtung kann eine Fernbedienung sein.

Gemäß einer weiteren Ausgestaltung ist ein Generator vorgesehen, der in einer Datenverarbeitungseinheit einer Empfangseinrichtung eingerichtet ist.
Der Generator ist eingerichtet, auf eine Anfrage eine Antwort zu erzeugen. wobei dem Generator eine Datenumgebung bereitgestellt ist zum Erheben von Daten.

Gemäß einer Ausführungsform des Generators ist vorgesehen, dass die Datenumgebung Daten zum technischen Zustand der Datenverarbeitungseinheit bereitstellt. Dazu zählen beispielsweise die Systemzeit, die Verbrauchsdaten der CPU, Energiewerte usw.

Gemäß einer Ausführungsform des Generators ist vorgesehen, dass die Datenumgebung gespeicherte Daten bereitstellt. Dazu zählen insbesondere auf einem Speichermedium im Dateiformat persistent gespeicherte Daten.

Gemäß einer Ausführungsform des Generators ist vorgesehen, dass die Datenumgebung Daten eines mit der Datenverarbeitungseinheit gekoppelten Gerätes bereitstellt. Das Gerät kann beispielsweise zum Erheben von Messdaten eingerichtet sein.

Ein möglicher Vorteil der Erfindung ist darin zu sehen, dass eine Empfangseinrichtung, die eingerichtet ist, Information vorzuhalten, zu speichern und/oder aus dem näheren Umfeld der Empfangseinrichtung zu erheben, diese Informationen anzeigen kann und ferner indem anzeigen kann, dass ein Bediener eine solche Anzeige über den gebräuchlichen Weg der Programmauswahl auf einem festgelegten Programmplatz auffindet und aufruft. Die dafür notwendigen Bedienhandlungen sind für den Bediener leicht zu merken und leicht auszuführen.

Nachfolgend wird die Erfindung anhand von Ausführungsbeispielen und zugehörigen Zeichnungen erläutert. Hierzu zeigen:
- Fig. 1: Empfangseinrichtung - mehrere Medienquellen
- Fig. 2: Empfangseinrichtung - externer Ausgabeinhalt
- Fig. 3: Empfangseinrichtung - interner Ausgabeinhalt (Kalender)
- Fig. 4: Empfangseinrichtung - externer und interner Ausgabeinhalt
- Fig. 5: Empfangseinrichtung - EPG/Programmliste
- Fig. 6: Empfangseinrichtung - EPG/Programmliste mit internen Ausgabeinhalt
- Fig. 7: Empfangseinrichtung - Bedienvorrichtung

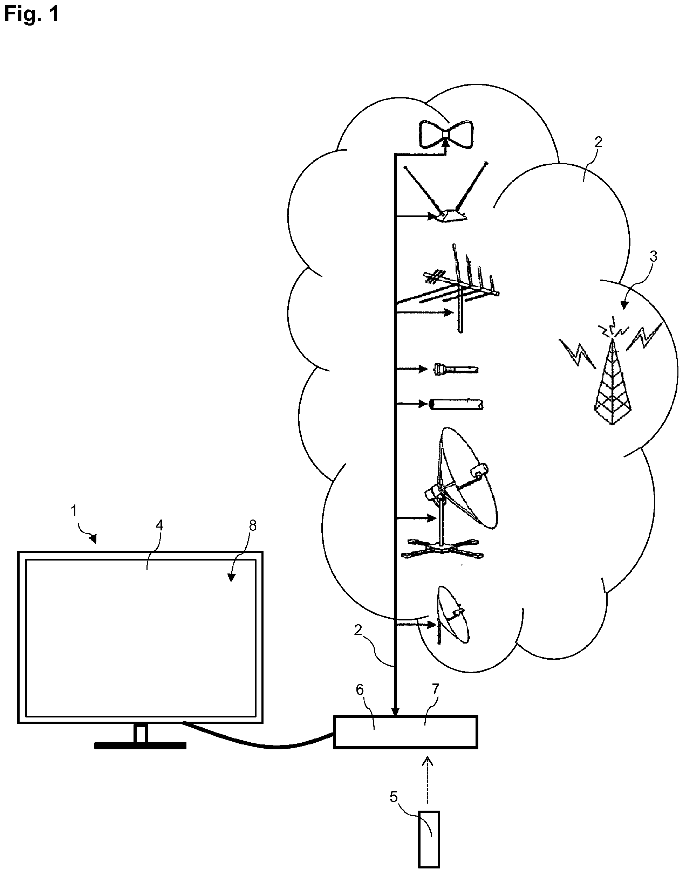

In der **Fig. 1** ist die Empfangseinrichtung 1 gezeigt, die eine Ausgabevorrichtung 4 aufweist. Die Ausgabevorrichtung 4 ist zum Ausgeben eines Ausgabeinhaltes 8 eingerichtet. Gemeint ist das Ausgeben primär von Bild aber auch von Ton, wobei es seitens der Medienquellen 3 auch vorgesehen sein kann, dass ausschließlich Bild (Bildschirmtext) oder Ton (Radio) zur Ausgabe kommt. Ferner weist die Empfangseinrichtung 1 eine Datenverarbeitungseinheit 6 auf. Diese Datenverarbeitungseinheit 6 kann mit einer Ausgabevorrichtung 4 verbunden oder gekoppelt sein, wobei es möglich ist, die Ausgabevorrichtung 4 und die Datenverarbeitungseinheit 6 in einem Gerät zu integrieren (nicht dargestellt).

Die Empfangseinrichtung 1 weist ferner eine Bedienvorrichtung 5 auf, die in dem gezeigten Beispiel eine Fernbedienung ist (Infrarot-Fernbedienung). Mittels der Fernbedienung 5 kann beispielsweise ein Bediener die Datenverarbeitungseinheit 6, die eine Empfangseinheit 7 aufweist, derart bedienen, dass er einen Medieninhalten 2 von einer Medienquelle 3, der als Ausgabeinhalt 8 ausgegeben werden soll, auswählt (Programmwahl). Dabei wird es sich primär um lineare Medieninhalte handeln.

Die Medienquelle 3 ist vereinfacht als Sendeturm dargestellt, über den der linearen Medieninhalt 2 über längere Distanzen übertragen wird. Es sind Beispiele von Antennen oder von Anschlussmedien wie Kabel gezeigt, mittels derer veranschaulicht werden soll, dass der (z.B. lineare) Medieninhalt 2 über eine Vielzahl von technischen Übertragungsmitteln und -wegen zu der Empfangseinheit 7 gelangen kann. Nicht explizit dargestellt ist hier der Anschluss an das Internet, wobei auch das mittels der angedeuteten Kabel und Antennen möglich ist. Die Kabel weisen ferner auf den Empfang von DVB-C hin. Ferner sind Satellitenantennen gezeigt für den Empfang von DVB-S sowie terrestrische Antennen für DVB-T oder DAB.

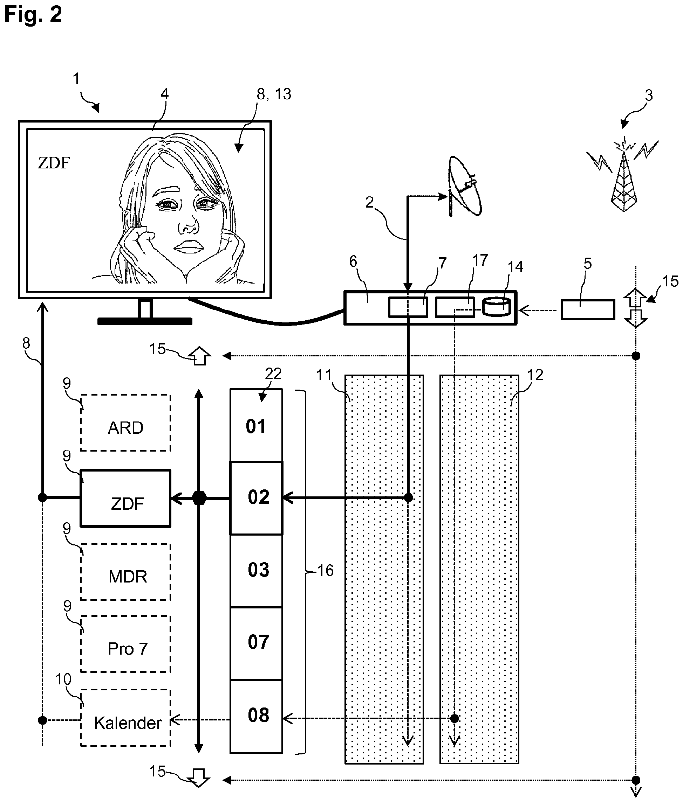

In der **Fig. 2** ist die Empfangseinrichtung 1 gezeigt, wobei mittels der ersten Funktionen 11 ein externer Ausgabeinhalt 9 als Ausgabeinhalt 8 bereitgestellt ist, welcher auf der Ausgabevorrichtung 4 zu sehen ist. Gezeigt ist zudem in diesem Beispiel, dass von der Medienquelle 3 über Satellit ein linearer Medieninhalt 2 mittels der Empfangseinheit 7 empfangen wird. Bei dem linearen Medieninhalt 2 handelt es sich um das Programm ZDF, das auf dem Programmplatz 22 (Nummer 02) eingerichtet ist.

Für die mehreren Programme sind Programmplätze 22 vorgesehen, die zusammen eine Sequenz 16 aufweisen (d.h. festgelegte Reihenfolge mit eindeutigen Nummern). Jeder der Programmplätze 22 ist genau mit einem Programm verknüpft, wobei der Programmplatz 22 mit der Nummer 08 eine Ausnahme bildet. Die Ausnahme besteht darin, dass an der Nummer 08 ein interner Ausgabeinhalt 10 bereitgestellt werden kann (z.B. ein Kalender). Mittels der übrigen Programmplätze 22 lässt sich ein externer Ausgabeinhalt 9 bereitstellen. Zum Bereitstellen des externen Ausgabeinhaltes 9 ist die erste Funktion 11 eingerichtet und zum Bereitstellen des internen Ausgabeinhaltes 10 die zweite Funktion 12.

Hinsichtlich der Sequenz 16 soll angedeutet sein, dass mittels der Bedienvorrichtung 5 und den mit der Bedienvorrichtung 5 erzeugbaren Bedienbefehlen 15 die Auswahl des Programmplatzes 22 einhergeht. Somit hat ein Bediener die Möglichkeit zu wählen, ob der Ausgabeinhalt 8 ein externer Ausgabeinhalt 9 oder ein interner Ausgabeinhalt 10 sein soll. Für letzteres ist die zweite Funktion 12 derart eingerichtet, dass ein Generator 17 mittels der Daten 14, die in der und/oder der Datenverarbeitungseinheit 6 bereitgestellt sind, den externen Ausgabeinhalt 9 erzeugt, was beispielsweise eine Kalenderansicht sein kann.

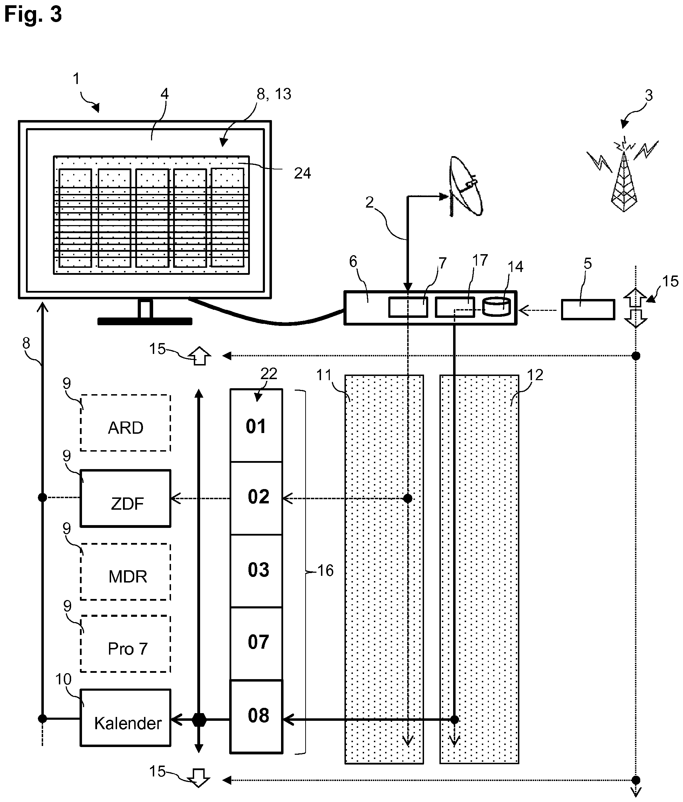

Anhand der **Fig. 3** ist erkennbar, wie das Anzeigen einer Kalenderansicht 24 gemäß den Erläuterungen zu Fig. 2 gemeint ist. Im Unterschied zum vorherigen Beispiel ist der Ausgabeinhalt 8 ein interner Ausgabeinhalt 10, der mittels der zweiten Funktion 12 bereitgestellt wird.

Der Generators 17 kann derart ausgebildet sein, dass er Signale, Daten und/oder einen Datenstrom erzeugt, der mittels der Ausgabevorrichtung 4 ausgebbar ist. Dabei kann es sich beispielsweise um ein grafisches Bild (Grafik) oder um eine Tonsequenz handeln, das angezeigt beziehungsweise die ausgegeben werden soll, oder um ein Datenformat, das mittels einer weiteren technischen Einrichtung interpretiert und für die Ausgabevorrichtung 4 aufbereitet wird. Eine solche technische Einrichtung kann ein sog. HTML-Anzeiger (engl. HTML-Client, "Browser") -hier Browser- sein. TV-Geräte können derartige Browser aufweisen. Es erscheint zweckmäßig, dass der Generator 17 Ausgaben im HTML-Format erzeugt und gemäß HTML-Protokoll reagiert. Mit anderen Worten kann der Generators 17 als ein im Leistungsumfang stark reduzierter Webserver aufgebaut sein. Ferner kann als Protokoll MHEG zum Einsatz kommen.

Der Generators 17 kann alternativ ein OSD-Generator sein (engl. OSD:"on screen display"). Ein solcher Generator ist in der Lage, mindestens eine Grafik im Sinne eines internen Ausgabeinhaltes 8 für die Ausgabevorrichtung 4 zu erzeugen und mit einem Funktionsumfang 13 zu verknüpfen. Die OSD-Funktionalität kommt nicht selten für den Aufbau von Menüs zum Einstellen der Empfangseinrichtung 1 zum Einsatz.
Dabei ist es möglich, dass die Struktur des/der OSD in die Empfangseinrichtung 1 über eine Netzverbindung geladen wird. Dabei geht es folglich nicht um Mediendaten. Ferner werden die Daten 14, die den Inhalt des/der OSD bilden, durch die Datenverarbeitungseinheit 6 bereitgestellt.

Hinsichtlich der Daten 14 kann der Generator 17 jegliche Informationen verwenden, die der Datenverarbeitungseinheit 6 zu Verfügung stehen. Dazu gehören beispielsweise zeitliche Information wie Datum und Uhrzeit, Betriebszustände der Datenverarbeitungseinheit 6 selbst, derer Komponenten sowie angeschlossener Geräte. In Betracht kommen ferner Informationen, die in der Datenverarbeitungseinheit 6 hinterlegt sind, wie beispielsweise Notrufnummern oder dergleichen. Sofern Geräte an Datenverarbeitungseinheit 6 angeschlossen oder mit dieser gekoppelt sind, lassen sich auch Daten 14 aus diesen Geräten verarbeiten.

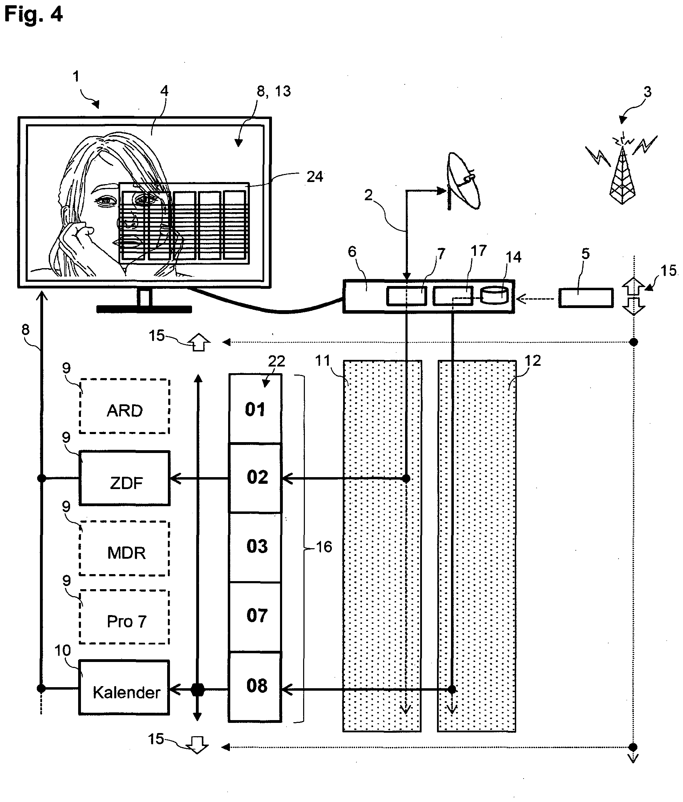

In der **Fig. 4** ist ein Ausführungsbeispiel gezeigt, in dem der Ausgabeinhalt 8 sowohl aus einem externen Ausgabeinhalt 9 als auch aus einem internen Ausgabeinhalt 10 gebildet ist. Es ist vorgesehen, dass der Bediener mittels eines oder mehrerer Bedienbefehle 15 den Programmplatz 22 mit der Nummer 08 gewählt hat. Folglich bewirkt die zweite Funktion 12, dass der Generator 17 den internen Ausgabeinhalt 10 erzeugt. Der Bediener könnte beispielsweise zuvor den Programmplatz 22 mit der Nummer 02 gewählt haben, wobei dieser -zuvor gewählte- externe Ausgabeinhalt 9 angezeigt wird. Der Kalender 24 überlagert gezeigtermaßen den zuvor empfangenen Medieninhalt 2, der mittels der ersten Funktion 11 auch weiterhin empfangen und dargestellt wird. Hintergrund dieses Vorschlages ist, dass der Bediener möglicherweise nach Ansicht des Kalenders 24, den er über dem Programmplatz 22 mit der Nummer 08 zur Ansicht gebracht hat, wieder zu dem Programmplatz 22 mit der Nummer 02 (ZDF) zurückwechseln wird. Die Darstellung des Kalenders 24 kann mit einer einstellbaren Transparenz erfolgen.

Hinsichtlich der Sequenz 16 hat nunmehr der Bediener z.B. die Möglichkeit, sich dem Programmplatz 22 mit der Nummer 08 -für den Kalender- vorzumerken. D.h., er kann mittels der Eingabe der Ziffern null und acht den Programmplatz direkt wählen. Alternativ hat er gemäß des Beispiels die Möglichkeit, durch dreimaliges Betätigen der Pfeiltasten (vor und zurück) zwischen den Programmplätzen 22 zu wechseln (zu springen). In der Sequenz 16 ist es hinsichtlich der Nummerierung (Nummern 01, 02, 03, 07, 08) zunächst nicht festgelegt, welche Nummer verwendet wird. Entscheidend für die Sequenz 16 ist die Reihenfolge in der nacheinander die Programme anwählbar sind (z.B. mit den Pfeiltasten).

Es kann eine bereits vorsortierte Programmliste (A) mit Kennungen 22 ausschließlich für externe Ausgabeinhalte 9 vorliegen. Es kann vorgesehen sein, dass ferner eine Auflistung (B) für internen Ausgabeinhalt 10 gebildet ist. Letztere kann in einem Listeneintrag (Zeile) einen Verweis 23 aufweisen mit einer Kennung, hinter die der selbige Listeneintrag einzufügen ist (in der Programmliste A). Da die Programmliste (A) und die Auflistung (B) für sich eine Sequenz aufweisen, wird mit der Vereinigung von A und B die Sequenz 16 gebildet. Eine andere Sichtweise ist die, dass in die Sequenz von A die Einträge von B eingegliedert oder eingereiht werden.

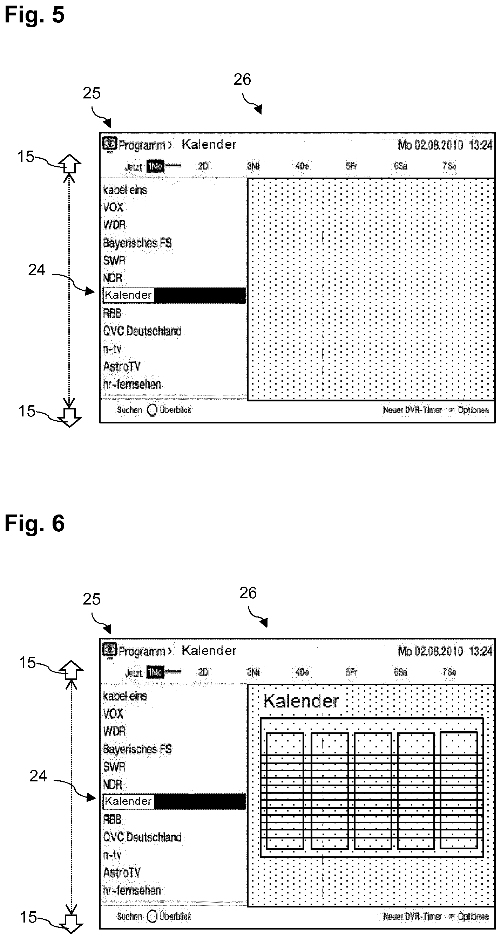

In der **Fig. 5** ist das zuletzt Geschilderte am Beispiel einer elektronischen Programmzeitschrift 26 (engl. EPG:"electronic program guide") gezeigt. In der EPG 26 ist eine Programmliste 25 angezeigt. Jeder Programmplatz 22 ist mittels der Bedienbefehle 15 (Pfeiltasten) auswählbar. In der Programmliste 25 sind bekannte TV-Programme wie VOX, SWR, NDR usw. aufgeführt. Die Ausnahme hiervon ist, dass ein Programmplatz mit dem Schriftzug "Kalender" 24 versehen ist. Es sollte erkennbar sein, dass sich der Kalender 24 adäquat wie die übrigen Programme in der Programmliste 25 auswählen und zur Anzeige bringen lässt. Das Ergebnis kann eine Darstellung gemäß der Fig. 3 oder der Fig. 4 sein.

Anhand der **Fig. 6** soll erklärt werden, dass der Kalender 24 bereits dann innerhalb der EPG 26 angezeigt werden kann, wenn der Kalender 24 in der Programmliste 25 ausgewählt oder angewählt ist. Die Anzeige des Kalenders erfolgt in dem Anzeigebereich (rechts-mitten/unten), in dem regulär die Sendungen und die zugehörigen Zeiten (Von, Bis) dargestellt sind. Gestaltbar ist der Kopfbereich der Anzeige (enthält Kürzel für Wochentage) hinsichtlich einer Synchronisation der Wochentage im Kopfbereich (Kürzel) und der in dem Kalender angezeigten Wochentage.

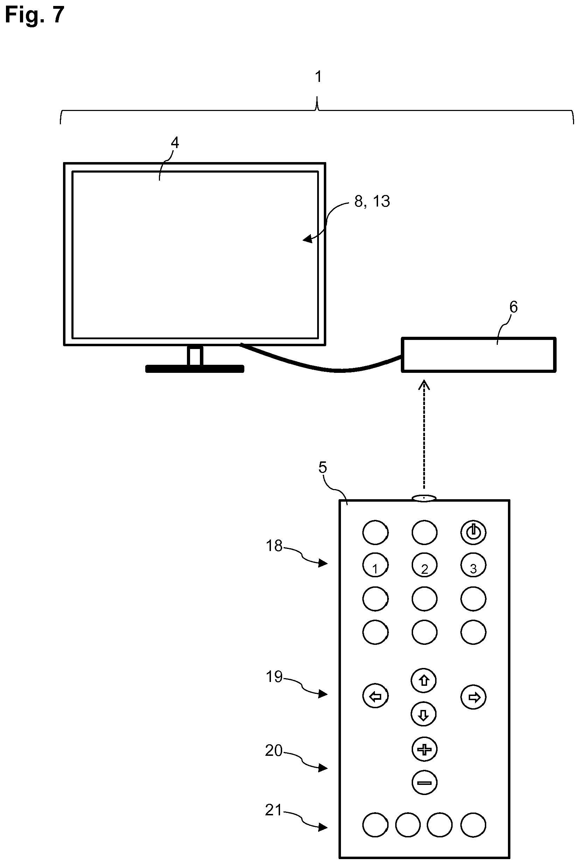

Mit der **Fig. 7** soll die Bedienvorrichtung 5 hinsichtlich der Bedienbefehle 15 sowie der zur Verfügung stehenden Tasten näher erläutert werden. Die Bedienvorrichtung 5 übergibt die Bedienbefehle 15 an die Datenverarbeitungseinheit 6 beispielsweise mittels eines Infrarotsignals. Es können die Datenverarbeitungseinheit 6 und die Ausgabevorrichtung 4 in einem Gerät integriert sein. Derartiges ist bei TV-Geräten üblich. In einem solchen Fall kommuniziert die Bedienvorrichtung 5 (Fernbedienung) mit dem TV-Gerät möglicherweise direkt, wobei letztlich die Datenverarbeitungseinheit 6 den Befehl von der Bedienvorrichtung 5 empfängt und verarbeitet (d.h. übergeben bekommt).

Für solche Bedienvorrichtungen 5 gibt es standardisierte Verfahren, wonach für die betätigte Taste eine Zahl (Tasten-Kodierung) an die Datenverarbeitungseinheit 6 übergeben/übertragen wird. Es ist vorgesehen, dass zu dem Ausgabeinhalt 8 ein Funktionsumfang 13 angelegt ist oder mit diesem verknüpft ist, der zuordnet, welche gedrückte Taste 21 welche Reaktionen hervorruft und/oder welche Funktion ausgelöst oder aufgerufen wird. Dabei sind die Tasten durch den Funktionsumfang 13 so belegt, dass regulär mittels der Tasten mit Ziffern 18, der Tasten mit Pfeil 19 und/oder der Tasten mit Plus- oder Minus-Zeichen 20 eine simultane Navigation in der Programmliste 25 ermöglicht ist. D.h., dass ein Programm direkt mittels der Zifferntasten 18 angewählt werden kann. Alternativ ist es möglich mittels der Pfeiltasten 19 und/oder der Tasten mit Plus- oder Minus-Zeichen 20 (Richtungsindikationen) von einem Programmplatz 22 zu einem nebenliegenden entweder niedrigeren oder höheren Programmplatz 22 zu gelangen sowie diesen auszuwählen.

Die Bedienvorrichtung 5 kann Tasten mit einer Sonderbelegung 21 oder für eine Sonderbelegung aufweisen. Üblicherweise sind diese Tasten 21 farbig gekennzeichnet mit den Farben rot, blau, grün und gelb. Die Belegung dieser Tasten 21 ist regelmäßig über den Funktionsumfang 13 sehr konkret auf den Ausgabeinhalt 8 abgestimmt. D.h., die Tasten mit einer Sonderbelegung 21 weisen in der Regel unterschiedliche Belegung auf, je nachdem, welcher Ausgabeinhalt 8 in dem Moment auf der Ausgabevorrichtung 4 gezeigt wird. Letztlich kann auch jede beliebige Taste 21 über den Funktionsumfang 13 so zugeordnet sein, dass der Ausgabeinhalt 8 ein interner Ausgabeinhalt 10 ist.

### Bezugszeichenliste

- 1: Empfangseinrichtung (TV-Gerät)
- 2: Medieninhalt (linearer / nicht-linearer)
- 3: Medienquelle
- 4: Ausgabevorrichtung
- 5: Bedienvorrichtung
- 6: Datenverarbeitungseinheit
- 7: Empfangseinheit
- 8: Ausgabeinhalt
- 9: externer Ausgabeinhalt
- 10: interner Ausgabeinhalt
- 11: erste Funktion
- 12: zweite Funktion
- 13: Funktionsumfang
- 14: Daten (der Datenverarbeitungseinheit)
- 15: Bedienbefehl
- 16: Sequenz
- 17: Generator
- 18: Taste mit Ziffern
- 19: Taste mit Pfeil
- 20: Taste mit +/-
- 21: Taste mit Sonderbelegung
- 22: Kennung / Programmplatz (im Zahlenformat)
- 23: Verweis
- 24: Kalender
- 25: Programmliste
- 26: Elektronische Programmzeitschrift (EPG)

## Patentansprüche

1. Empfangseinrichtung (1) zum Empfangen von Medieninhalten (2) aus verschiedenen Medienquellen (3) und zum Ausgeben derselben aufweisend, eine Ausgabevorrichtung (4), eine Bedienvorrichtung (5) und eine Datenverarbeitungseinheit (6),
wobei die Bedienvorrichtung (5) eingerichtet ist, mindestens einen Bedienbefehl (15) an die Datenverarbeitungseinheit (6) zu übergeben,
wobei die Datenverarbeitungseinheit (6) eingerichtet ist, der Ausgabevorrichtung (4) mindestens einen Ausgabeinhalt (8) bereitzustellen,
wobei mit dem Ausgabeinhalt (8) ein Funktionsumfang (13), der mindestens eine Funktion (11,12) aufweist, derart verknüpft ist, dass die Datenverarbeitungseinheit (6) den von der Bedienvorrichtung (5) übergebenen Bedienbefehl (15) einer Funktion (11,12) des Funktionsumfanges (13) zuordnet und die Funktion (11,12) ausführt,
wobei eine erste Funktion (11) derart eingerichtet ist, dass der Ausgabeinhalt (8) ein externer Ausgabeinhalt (9) ist, der von einer der Medienquellen (3) bezogenen Medieninhalt (2) aufweist,
wobei eine zweite Funktion (12) derart eingerichtet ist, dass Ausgabeinhalt (8) ein interner Ausgabeinhalt (10) ist, der aus Daten (14), die in der und/oder der Datenverarbeitungseinheit (6) bereitgestellt sind, gebildet ist.

2. Empfangseinrichtung gemäß Anspruch 1,
wobei der interne Ausgabeinhalt (10) insbesondere keinen Medieninhalt (2) aufweist und ausschließlich aus den Daten (14) der Datenverarbeitungseinheit (6) gebildet ist ,
wobei in dem Funktionsumfang (13) der mindestens eine Bedienbefehl (15) der mindestens einen Funktionen (11,12) derart zugeordnet ist und die Datenverarbeitungseinheit (6) eingerichtet ist, mittels des mindestens einen Bedienbefehls (15) eine erste Funktion (11) entsprechend einer Sequenz (16) auszuwählen,
wobei in die Sequenz (16) mindestens einmal eine zweite Funktion (12) eingegliedert ist.

3. Empfangseinrichtung gemäß Anspruch 1 oder 2,
wobei der interne Ausgabeinhalt (10) aus Daten (14) gebildet ist, die Systemdaten der Empfangseinrichtung (1) und/oder der Datenverarbeitungseinheit (6) sind, wobei die Systemdaten aufweisen, Datum/Uhrzeit, Betriebsdauer, Stromverbrauch und Benutzungszeiten sowie ferner Information zur Empfangsqualität und zu/von mindestens einem gekoppelten Gerät.

4. Empfangseinrichtung gemäß einem der Ansprüche 1 bis 3,
wobei die Datenverarbeitungseinheit (6) eine Empfangseinheit (7) aufweist und/oder mit einer solchen gekoppelt ist zum Empfangen von Medieninhalten (2) aus verschiedenen Medienquellen (3),
wobei die erste Funktion (11) eingerichtet ist, die Empfangseinheit (7) zu verwenden.

5. Empfangseinrichtung gemäß einem der Ansprüche 1 bis 4,
wobei die Datenverarbeitungseinheit (6) ein Generator (17) aufweist zum Erzeugen des mindestens einen Ausgabeinhaltes (8),
wobei die zweite Funktion (12) eingerichtet ist, den Generator (17) zu verwenden zum Erzeugen des mindestens einen internen Ausgabeinhaltes (10).

6. Empfangseinrichtung gemäß einem der Ansprüche 1 bis 5,
wobei der Generator (17) eingerichtet ist, formatierte Daten im XML-Format und/oder in einem HTML-Format zu erzeugen.

7. Empfangseinrichtung gemäß einem der Ansprüche 1 bis 6,
wobei mittels des mindestens einen Bedienbefehls (15) eine erste Funktion (11) entsprechend einer Sequenz (16) aus Zahlen indem auszuwählen ist, dass entweder die Ziffern der Zahl der Funktion nacheinander vollständig oder anteilig eingeben werden oder ein Richtungsindikator, um die Zahl zu in- oder dekrementieren,
wobei die Bedienvorrichtung (5) zum Eingeben von Ziffern Tasten mit Ziffern (18) und zum Eingeben von Richtungsindikatoren Tasten mit Pfeilen (19) und/oder Plus-/Minus-Zeichen (20) aufweist zum Übergeben eines adäquaten Bedienbefehls (15) an die Datenverarbeitungseinheit (6).

8. Empfangseinrichtung gemäß einem der Ansprüche 1 bist 7,
wobei die mindestens eine erste Funktion (11) eine eindeutige Kennung (22) im Zahlenformat für einen Programmplatz aufweist,
wobei die Sequenz (16) nach der eindeutigen Kennung (22) aufsteigend gebildet ist.

9. Empfangseinrichtung gemäß einem der Ansprüche 1 bis 8,
wobei die mindestens eine zweite Funktion (12) einen Verweis (23) auf die Kennung (22) einer ersten Funktion (11) aufweist, nach der die zweite Funktion (12) in die Sequenz (16) eingegliedert ist.

10. Empfangseinrichtung gemäß einem der Ansprüche 1 bis 9,
wobei der Ausgabeinhalt (8) aus dem internen Ausgabeinhalt (10) und dem externen Ausgabeinhalt (9) gebildet ist,
wobei der interne Ausgabeinhalt (10) eine Transparenz aufweist und somit den externen Ausgabeinhalt (9) überlagert,
wobei der externer Ausgabeinhalt (9), der zuletzt nicht überlagert angezeigte ist.
